# EUROPÄISCHE PATENTSCHRIFT

(11) **EP 3 788 284 B1**
(45) Veröffentlichungstag und Bekanntmachung des Hinweises auf die Patenterteilung: **17.04.2024**
(21) Anmeldenummer: 19722072.6
(22) Anmeldetag: 02.05.2019
(51) Int. Cl.: F16K 1/38, F16K 1/42

(54) **VORRICHTUNG ZUR REGELUNG DES DRUCKS VON FLUIDEN**
DEVICE FOR REGULATING THE PRESSURE OF FLUIDS
DISPOSITIF DE RÉGLAGE DE LA PRESSION DE FLUIDES

(30) Priorität: 03.05.2018 DE 102018110563
(43) Veröffentlichungstag der Anmeldung: 10.03.2021
(73) Patentinhaber: KAMAT GmbH & Co. KG, 58454 Witten-Annen (DE)
(72) Erfinder: CHENGOUR, Mohammed, 47506 Neukirchen-Vluyn (DE)
(74) Vertreter: Cohausz & Florack
(86) Internationale Anmeldenummer: PCT/EP2019/061185
(87) Internationale Veröffentlichungsnummer: WO 2019/211352

(56) Entgegenhaltungen:
- WO-A-2016/134909
- JP-A- 2002 188 732
- JP-A- 2002 188 732
- US-A- 2 866 477
- US-A- 2 866 477

## Beschreibung

Die Erfindung betrifft eine Vorrichtung zur Regelung des Drucks von Fluiden, umfassend: ein Ventilgehäuse mit einem Einlass und mit einem Auslass, ein Verschlusselement, das innerhalb des Ventilgehäuses angeordnet ist, einen Ventilsitz, der innerhalb des Ventilgehäuses angeordnet ist, und ein Zylindergehäuse mit einem beweglich darin gelagerten Kolben, der mit dem Verschlusselement verbunden ist, wobei das Verschlusselement beweglich gelagert ist, wobei das Verschlusselement und der Ventilsitz derart angeordnet sind, dass die Verbindung zwischen dem Einlass und dem Auslass geöffnet und teilweise oder vollständig geschlossen werden kann, und wobei der Ventilsitz beweglich ist.

Bei vielen Anwendungen ist es erforderlich, den Druck von Fluiden zu regeln und beispielsweise auf einen konstanten Druck einzustellen. Hierzu sind so genannte Überdruckventile oder Druckbegrenzungsventile sowie Drosselventile bekannt. Derartige Ventile leiten bei Überschreiten eines bestimmten Drucks Fluide aus einem System ab, um einen weiteren Druckanstieg zu verhindern. Nach dem Ansprechen des Ventils und dem Abbau des zu hohen Drucks durch Ablassen von Fluid schließt das Ventil wieder. Die abgeleiteten Fluide können gesammelt, zurückgeführt oder in die Umgebung abgelassen werden.

Besondere Herausforderungen stellen sich bei der Verwendung von Druckregelventilen in Hochdruckanlagen, also beispielsweise bei Drücken von mehr als 1000 bar. Um auch bei sehr hohen Drücken eine funktionierende Druckregelung zu erreichen, müssen die für die Abdichtung zuständigen Bauteile (z.B. Ventilsitz und Ventilkegel) mit großer Kraft aufeinander gepresst werden, was dazu führen kann, dass der Ventilsitz und der Ventilkegel verklemmen können. Die Gefahr des Verklemmens besteht insbesondere bei einem abrupten Druckabfall, der beispielsweise bei dem Ausfall einer Pumpe oder bei einem Defekt eines Schlauches auftreten kann. Verklemmte Ventile führen zu Ausfallzeiten und hohen Wartungskosten und sind somit zu vermeiden. Die Gefahr einer Verklemmung besteht insbesondere bei selbsthemmenden Bauteilen, beispielsweise einem Ventilkegel mit spitzem Kegelwinkel. Derartige Bauteile werden trotz der Selbsthemmung wegen ihrer guten Regelbarkeit eingesetzt.

Aus dem Dokument JP 2002 188 732 A ist ein Ventil zur Steuerung von Fluiden bekannt. Aus dem Dokument WO 2016/134909 A1 sind ein Ventil zum Schalten von Fluiden, eine Löschanlage mit einem derartigen Ventil und ein Verfahren zur Steuerung eines derartigen Ventils bekannt.

Vor diesem Hintergrund liegt der Erfindung die Aufgabe zu Grunde, die eingangs genannte und zuvor näher beschriebene Vorrichtung zur Regelung des Drucks von Fluiden derart auszugestalten und weiterzubilden, dass auch bei einem abrupten Druckabfall kein Verklemmen des Ventils zu befürchten ist.

Diese Aufgabe wird bei einer Vorrichtung nach dem Oberbegriff von Patentanspruch 1 dadurch gelöst, dass ein Hub zwischen dem Ventilsitz und seinem unteren Anschlag bei geschlossener Ventilstellung größer ist als ein Hub zwischen dem Kolben und seinem unteren Anschlag, und dass das Verschlusselement als Ventilkegel gestaltet ist, der einen Kegelwinkel zwischen gegenüberliegenden Seiten der Mantelfläche im Bereich zwischen 3° und 8°, insbesondere zwischen 4° und 6° aufweist.

Die Erfindung betrifft eine Vorrichtung zur Regelung des Drucks von Fluiden, insbesondere zur Einstellung und/oder Begrenzung des Maximaldrucks von Fluiden. Bei den Fluiden kann es sich beispielsweise um Gase wie Luft oder vor allem um Flüssigkeiten wie Wasser handeln. Die Vorrichtung umfasst zunächst ein Ventilgehäuse mit einem Einlass und mit einem Auslass. Durch den Einlass kann ein Fluid in das Ventilgehäuse einströmen, durch den Auslass kann es wieder aus dem Ventilgehäuse herausströmen. Einlässe und Auslässe können auch allgemein als "Anschlüsse" bezeichnet werden, so dass es sich um ein Ventilgehäuse mit wenigstens zwei Anschlüssen handelt. Das Ventilgehäuse ist vorzugsweise aus Metall hergestellt. Die Vorrichtung umfasst weiterhin ein Verschlusselement, das innerhalb des Ventilgehäuses angeordnet ist, wobei das Verschlusselement teilweise oder vollständig in dem Ventilgehäuse angeordnet sein kann. Bei dem Verschlusselement kann es sich beispielsweise um einen Ventilkegel handeln. Zudem umfasst die Vorrichtung einen Ventilsitz, der innerhalb des Ventilgehäuses angeordnet ist, wobei auch der Ventilsitz teilweise oder vollständig in dem Ventilgehäuse angeordnet sein kann. Das Verschlusselement ist beweglich gelagert, um in Richtung des Ventilsitzes und in Gegenrichtung bewegt werden, wodurch das durch diese Bauteile gebildete Ventil geöffnet und teilweise oder vollständig geschlossen werden kann. Im Betrieb ist das Ventil meistens in einer teilweise geschlossenen Stellung, wodurch eine "Drosselung" erreicht wird. Vorzugsweise kann das Ventil stufenlos zwischen der geöffneten und der geschlossen Stellung verstellt werden. Das Verschlusselement soll insbesondere relativ zu dem Ventilgehäuse beweglich gelagert sein. Das Verschlusselement kann auf unterschiedliche Weise betätigt werden, beispielsweise pneumatisch, hydraulisch, elektrisch oder (rein) mechanisch (z.B. durch eine vorgespannte Feder). Das Verschlusselement und der Ventilsitz sind derart angeordnet, dass die Verbindung zwischen dem Einlass und dem Auslass geöffnet und teilweise oder vollständig geschlossen werden kann. Die Verbindung zwischen dem Einlass und dem Auslass kann für Fluide insbesondere dadurch geöffnet und geschlossen bzw. gedrosselt werden, dass das Verschlusselement und der Ventilsitz zusammengedrückt bzw. auseinandergezogen werden. Diese Anforderung wird durch eine entsprechende Dimensionierung und Anordnung der einzelnen Bauteile erreicht.

Erfindungsgemäß ist vorgesehen, dass der Ventilsitz beweglich gelagert ist. Zum Öffnen und Schließen eines Ventils ist eine Relativbewegung zwischen dem Verschlusselement und dem Ventilsitz erforderlich. Gemäß der Erfindung soll diese Relativbewegung nicht allein durch eine bewegliche Lagerung des Verschlusselements erreicht werden; stattdessen soll auch der Ventilsitz beweglich gelagert sein. Der Ventilsitz soll insbesondere relativ zu dem Ventilgehäuse beweglich gelagert sein. Aufgrund der beweglichen Lagerung des Ventilsitzes wird auch von einem "schwimmenden" Ventilsitz gesprochen. Der Ventilsitz kann also - wie auch das Verschlusselement - unterschiedliche Positionen einnehmen. Die Position des Verschlusselements und des Ventilsitzes werden daher nicht durch eine starre Einbauposition bestimmt, sondern durch das Verhältnis von Druck und Gegendruck bzw. Kraft und Gegenkraft, die auf das Verschlusselement und (entgegengerichtet) auf den Ventilsitz einwirken. Durch die "schwimmende" Lagerung wird erreicht, dass der Ventilsitz bei einem abrupten Druckabfall aufgrund des dann nicht mehr bestehenden Gleichgewichts in eine Richtung gedrückt werden kann und somit "nachgeben" kann. Die Beweglichkeit des Ventilsitzes führt dazu, dass bei der Ausweichbewegung des Ventilsitzes reibungsbedingt Bewegungsenergie in Wärme umgewandelt werden kann. Dies ermöglicht einen sanfteren Anschlag des Ventilsitzes und somit eine verringerte Klemmgefahr. Das Verschlusselement kann also auch nach einem abrupten Druckabfall ohne Verklemmen aus dem Ventilsitz gezogen werden, nachdem der Gegendruck verringert wurde.

Erfindungsgemäß ist zudem vorgesehen, dass ein Hub zwischen dem Ventilsitz und seinem unteren Anschlag bei geschlossener Ventilstellung größer ist als ein Hub zwischen dem Kolben und seinem unteren Anschlag. Unter dem "unteren" Anschlag kann insbesondere derjenige Anschlag verstanden werden, der näher am Einlass (und ggf. einer daran angeschlossenen Pumpe sowie einem daran angeschlossenen Verbraucher) liegt als der gegenüberliegende - "obere" - Anschlag. Es kann sich also um den einlassseitigen Anschlag handeln. Indem der Hub des Kolbens in Richtung des Einlasses kürzer ist als der Hub des Ventilsitzes in dieselbe Richtung, wird die Bewegung des Kolbens in diese Richtung früher begrenzt als die Bewegung des Ventilsitzes. Dies hat beispielsweise bei einem plötzlichen Druckabfall im Bereich des Einlasses den Vorteil, dass der Kolben bei seiner Bewegung in Richtung des Einlasses früher (durch Kontakt mit dem Anschlag) abgebremst wird als der Ventilsitz, wodurch ein festes Zusammendrücken und Verklemmen von Verschlusselement und Ventilsitz verhindert werden.

Nach einer Ausgestaltung der Vorrichtung ist vorgesehen, dass der Ventilsitz zwischen einem ersten Anschlag und einem zweiten Anschlag linear beweglich gelagert ist. Eine lineare Beweglichkeit lässt sich konstruktiv besonders einfach umsetzen und hat zudem den Vorteil einer guten Regelbarkeit des Ventils. Die Anschläge dienen der Begrenzung des Umfangs der Beweglichkeit des Ventilsitzes - also der Begrenzung des "Hubs". Vorzugsweise ist der Ventilsitz stufenlos zwischen dem ersten Anschlag und dem zweiten Anschlag linear beweglich gelagert.

Gemäß einer weiteren Ausbildung der Vorrichtung ist vorgesehen, dass der Ventilsitz einen Hub im Bereich zwischen 2 mm und 20 mm aufweist. Ein Hub im Bereich der angegebenen Grenzen hat sich als guter Kompromiss zwischen einem guten Ansprechverhalten (kleinerer Hub bevorzugt) und einer möglichst guten "Dämpfung" des Stoßes bei einem abrupten Druckabfall (größerer Hub bevorzugt).

In weiterer Ausbildung der Vorrichtung wird vorgeschlagen, dass der Ventilsitz beweglich in einer Ventilsitzführung gelagert ist und/oder dass das Verschlusselement beweglich in einer Ventilführung gelagert ist. Mit anderen Worten kann vorgesehen sein, dass die beweglich gelagerten Bauteile (Ventilsitz, Verschlusselement) keinen direkten Kontakt zur Innenwand des Ventilgehäuses haben, sondern indirekt, nämlich über Führungselemente wie beispielsweise eine Ventilführung bzw. eine Ventilsitzführung beweglich in dem Ventilgehäuse gelagert sind. Dies hat den Vorteil, dass derartige Führungselemente optimal auf die eine präzise Führung, eine gute Abdichtung und auf einen geringen Verschleiß optimiert werden können. Dies kann beispielsweise durch eine geeignete Materialwahl erreicht werden. Insbesondere kann vorgesehen sein, dass die Führungselemente aus einem anderen Material als das Ventilgehäuse hergestellt sind.

Erfindungsgemäß ist zudem vorgesehen, dass das Verschlusselement als Ventilkegel gestaltet ist. Das Verschlusselement kann teilweise oder vollständig kegelförmig gestaltet sein. Vorzugsweise weist bei dieser Ausgestaltung auch der Ventilsitz eine kegelförmige Öffnung bzw. einen kegelförmigen Kanal auf. Eine kegelförmige Gestaltung hat den Vorteil, dass sich zwischen dem Verschlusselement und dem Ventilsitz ein umlaufender Spalt bildet, dessen Spaltbreite sich durch eine Relativbewegung zwischen Verschlusselement und Ventilsitz sehr präzise einstellen lässt. Aufgrund seiner rotationssymmetrischen Form hat ein Kegel zudem den Vorteil, dass beim Einführen des Ventilkegels keine Korrektur der Drehstellung erfolgen muss. Der Ventilkegel weist gemäß der Erfindung einen Kegelwinkel bzw. Öffnungswinkel (Winkel zwischen gegenüberliegenden Seiten der Mantelfläche) im Bereich zwischen 3° und 8°, insbesondere zwischen 4° und 6° auf.

Gemäß einer weiteren Ausbildung der Vorrichtung ist vorgesehen, dass der Ventilsitz einen Kanal aufweist. Der Kanal dient dem Zweck, dass der Ventilsitz von einem Fluid durchströmt werden kann. Zudem kann das Verschlusselement in den Kanal eingeführt werden, wobei eine Selbstzentrierung erfolgen kann. Vorzugsweise weist der Kanal eine rotationssymmetrische Form (z.B. zylindrisch oder kegelförmig) auf, so dass das Verschlusselement in den Kanal eingeführt werden kann, ohne dass eine Korrektur der Drehstellung erfolgen muss. Der Kanal kann teilweise oder vollständig rotationssymmetrisch gestaltet sein.

Erfindungsgemäß zeichnet sich die Vorrichtung aus durch ein Zylindergehäuse mit einem beweglich darin gelagerten Kolben, der mit dem Verschlusselement verbunden ist. Durch ein Zylindergehäuse und einen darin gelagerten Kolben kann eine hydraulische oder pneumatische Ansteuerung der Vorrichtung erreicht werden. Insbesondere die Bewegung des Verschlusselements kann hydraulisch oder pneumatisch erfolgen. Das Verschlusselement kann direkt oder indirekt (beispielsweise über einen Verschlusselementträger und eine Kugel) mit dem Kolben verbunden sein.

Zu dieser Weiterbildung wird weiter vorgeschlagen, dass das Zylindergehäuse eine Druckluftöffnung zum Anschluss einer Drucklufteinheit aufweist. Durch einen Anschluss kann die Vorrichtung - meist ohnehin vorhandene - externe Drucklufteinheiten nutzen, so dass die Vorrichtung keine eigene Drucklufteinheit aufweisen muss. Ein pneumatischer Antrieb zeichnet sich durch eine große Robustheit aus, zudem kann Umgebungsluft als Arbeitsmedium eingesetzt werden.

Eine weitere Ausgestaltung der Vorrichtung zeichnet sich aus durch ein mit dem Einlass verbundenes T-Stück zum Anschluss einer Pumpe und eines Verbrauchers. Durch ein T-Stück - also ein Adapter mit drei Anschlüssen - kann die Vorrichtung zur Regelung des Druckes in einer Fluidleitung eingesetzt werden, indem ein Anschluss des T-Stücks mit der Vorrichtung verbunden wird und indem die die anderen beiden Anschlüsse des T-Stücks mit jeweils einer Fluidleitung verbunden werden.

Die Vorrichtung eignet sich in besonderer Weise zur Verwendung in einer Hochdruckanlage mit wenigstens 1000 bar, insbesondere wenigstens 2000 bar. Die gute Eignung für Hochdruckanwendungen liegt daran, dass aufgrund der beweglichen Lagerung des Ventilsitzes auch bei sehr hohen Drücken kein Verklemmen zu befürchten ist, wenn ein abrupter Druckabfall eintreten sollte.

Die Erfindung wird nachfolgend anhand einer lediglich ein bevorzugtes Ausführungsbeispiel darstellenden Zeichnung näher erläutert. In der Zeichnung zeigen:
- Fig. 1:: eine erfindungsgemäße Vorrichtung zur Regelung des Druckes in einer ersten Ventilstellung,
- Fig. 2:: die Vorrichtung aus Fig. 1 in einer zweiten Ventilstellung,
- Fig. 3:: die Vorrichtung aus Fig. 1 in einer dritten Ventilstellung, und
- Fig. 4:: die Vorrichtung aus Fig. 1 in einer vierten Ventilstellung.

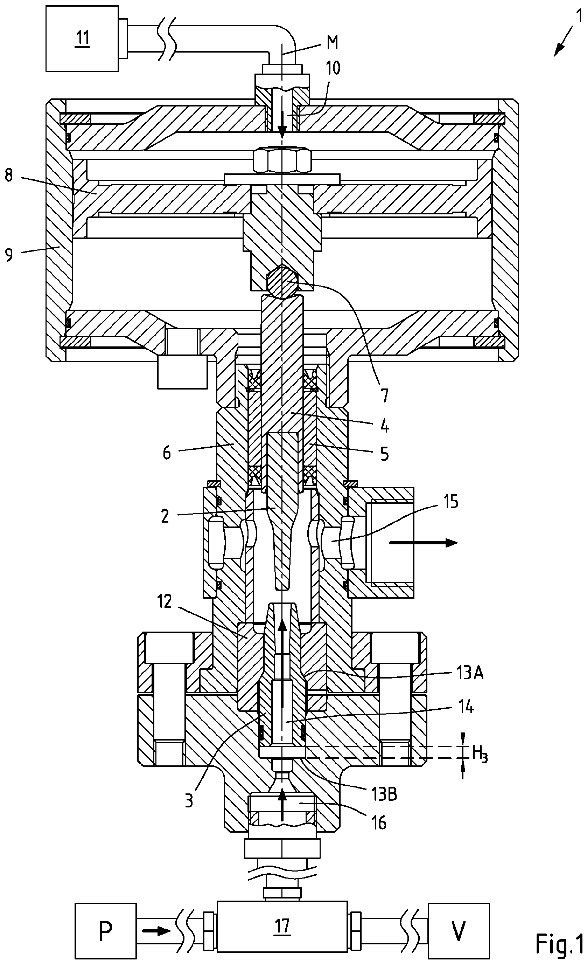

Fig. 1 zeigt eine erfindungsgemäße Vorrichtung 1 zur Regelung des Drucks in einer ersten Ventilstellung. Die Vorrichtung 1 umfasst ein als Ventilkegel ausgestaltetes Verschlusselement 2 und einen Ventilsitz 3. Das Verschlusselement 2 und der Ventilsitz 3 sind relativ zueinander beweglich gelagert und bilden zusammen ein Ventil, das geöffnet und teilweise oder vollständig geschlossen, also "gedrosselt" werden kann. In der in Fig. 1 gezeigten Stellung sind das Verschlusselement 2 und der Ventilsitz 3 voneinander getrennt, es handelt sich also um eine offene Ventilstellung. Das Verschlusselement 2 ist mit einem Verschlusselementträger 4 verbunden, der verschiebbar in einer Ventilführung 5 gelagert ist, die in einem Ventilgehäuse 6 angeordnet ist, das eine Mittelachse M aufweist. An der dem Verschlusselement 2 gegenüberliegenden Seite ist der Verschlusselementträger 4 über eine Kugel 7 mit einem Kolben 8 verbunden. Der Kolben 8 ist in einem mit dem Ventilgehäuse 6 verbundenen Zylindergehäuse 9 angeordnet und innerhalb des Zylindergehäuses 9 entlang der Mittelachse M verschiebbar. Der Verschlusselementträger 4 ist gegenüber dem Ventilgehäuse 6 abgedichtet, so dass kein Fluid zwischen dem Bereich oberhalb des Verschlusselementträgers 4 (insb. dem Zylindergehäuse 9) und dem Bereich unterhalb des Verschlusselementträgers 4 (insb. der Bereich des Verschlusselements 2 und des Ventilsitzes 3) strömen kann. Das Zylindergehäuse 9 weist eine Druckluftöffnung 10 auf, die mit einer Drucklufteinheit 11 verbunden werden kann. Bei der in Fig. 1 gezeigten Stellung ist die Drucklufteinheit 11 deaktiviert, so dass sich der Kolben 8 in einer "oberen" Stellung (nah an der Druckluftöffnung 10) befindet.

Der Ventilsitz 3 ist verschiebbar in einer Ventilsitzführung 12 gelagert, die einen oberen Anschlag 13A aufweist. Der Ventilsitz 3 kann in die Ventilsitzführung 12 eingeschoben werden, bis er an den oberen Anschlag 13A stößt. Die Vorrichtung 1 weist zudem einen unteren Anschlag 13B für den Ventilsitz 3 auf. Der Ventilsitz 3 kann daher zwischen dem oberen Anschlag 13A und dem unteren Anschlag 13B verschoben werden, wobei er in Richtung der Mittelachse M einen Hub H₃ zurücklegt. Der Ventilsitz 3 ist hohl ausgebildet und weist einen Kanal 14 auf, so dass er durchströmt werden kann. Das Ventilgehäuse 6 weist einen Auslass 15 auf, durch den durch das offene Ventil strömendes Fluid wieder aus der Vorrichtung 1 ausströmen kann. An seinem unteren Ende weist die Vorrichtung 1 einen Einlass 16 auf, an den der zu regelnde Fluidstrom angeschlossen werden kann. Beispielsweise kann der Einlass mit einem T-Stück 17 verbunden sein, das eine Pumpe P mit einem Verbraucher V verbindet.

Bei der in Fig. 1 dargestellten Stellung handelt es sich um eine offene Ventilstellung, die es erlaubt, die Pumpe P in einem drucklosen Umlaufbetrieb zu betreiben. Hierzu strömt ein Fluid - beispielsweise Wasser - von der Pumpe P zunächst in das T-Stück 17 und von dort in den Einlass 16 der Vorrichtung. Von dort strömt das Fluid weiter durch den Kanal 14 des Ventilsitzes 3 an dem geöffneten Verschlusselement 2 vorbei Richtung des Auslasses 15. Anschließend verlässt das Fluid die Vorrichtung 1 durch den Auslass 15 und kann von dort entweder in einen Tank geleitet werden und dort gesammelt werden oder durch einen "Bypass" zurück zu der Pumpe P geleitet werden. Der Verbraucher V wird bei der in Fig. 1 dargestellten Ventilstellung daher nicht mit unter Druck stehendem Fluid versorgt. Dies ermöglicht beispielsweise das problemlose Anfahren der Pumpe P. Der Verlauf der Strömung ist in Fig. 1 schematisch durch Pfeile dargestellt.

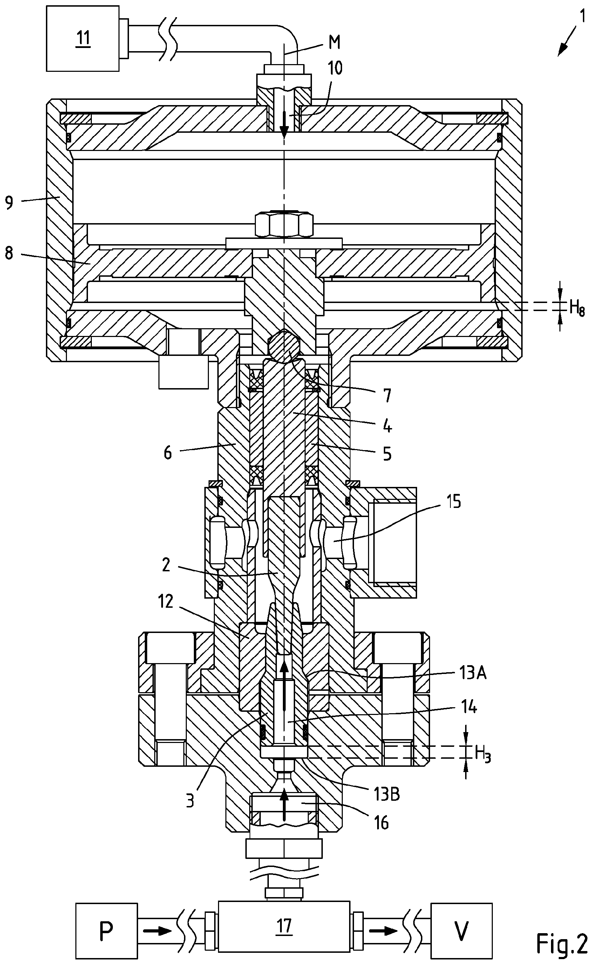

Fig. 2 zeigt die die Vorrichtung aus Fig. 1 in einer zweiten Ventilstellung. Die bereits im Zusammenhang mit Fig. 1 beschriebenen Bereiche der Vorrichtung 1 sind in Fig. 2 mit entsprechenden Bezugszeichen versehen. Bei der in Fig. 2 dargestellten Situation ist die Drucklufteinheit 11 aktiviert, so dass Luft über die Druckluftöffnung 10 in das Zylindergehäuse 9 geleitet wird, so dass der Kolben 8 in Richtung des Ventilsitzes 3 nach unten verschoben wird. Dies hat zur Folge, dass das Verschlusselement 2 und der Ventilsitz 3 zusammengedrückt werden, es handelt sich also um eine geschlossene Ventilstellung. Bei der in Fig. 2 gezeigten Stellung liegt der Ventilsitz 3 an dem oberen Anschlag 13A an. Aufgrund der "schwimmenden" Lagerung des Ventilsitzes 3 kann der Ventilsitz 3 aber auch jede andere Stellung zwischen dem oberen Anschlag 13A und dem unteren Anschlag 13B einnehmen, wobei die Stellung von dem Verhältnis der Fluiddrücke oberhalb und unterhalb des Ventilsitzes 3 abhängt.

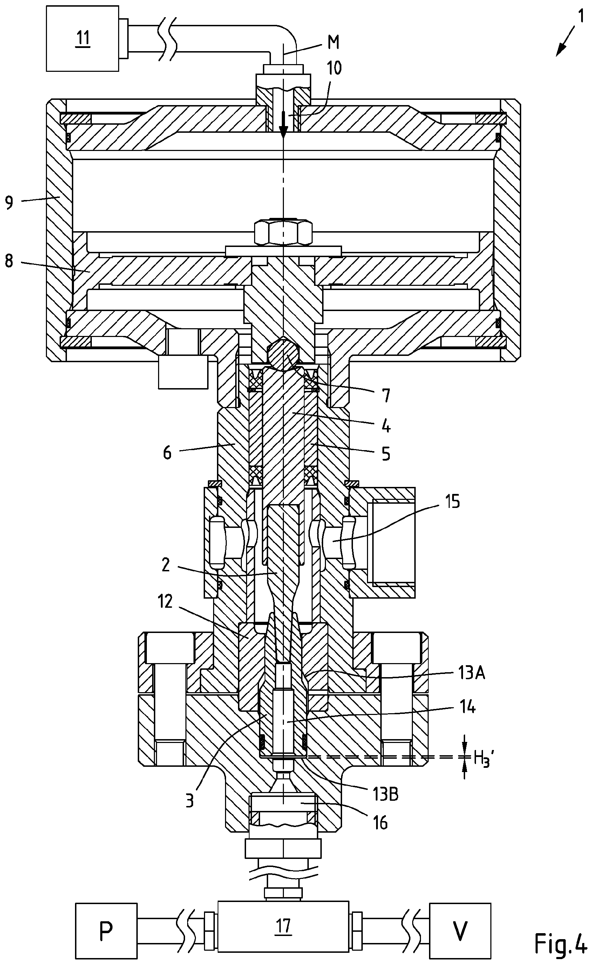

In der in Fig. 2 gezeigten Stellung ist der Weg zu dem Auslass 15 versperrt, so dass das Fluid von der Pumpe P durch das T-Stück zu der Verbraucher V strömt. Diese Ventilstellung wird zwar in der Praxis bei Drosselventilen nicht angestrebt, sie dient aber der Veranschaulichung der Funktionsweise. Der Kolben 8 kann noch um einen Hub H₈ in Richtung des Ventilsitzes 3 nach unten verschoben werden, bevor er in seinem Zylindergehäuse 9 an einen unteren Anschlag stößt. Vorzugsweise ist bei geschlossener Ventilstellung der Hub H₃ zwischen dem Ventilsitz 3 und seinem unteren Anschlag 13B größer als der Hub H₈ zwischen dem Kolben 8 und seinem unteren Anschlag. Der Vorteil dieses Verhältnisses zwischen dem Hub H₃ und dem Hub H₈ wird nachfolgend anhand von Fig. 4 beschrieben.

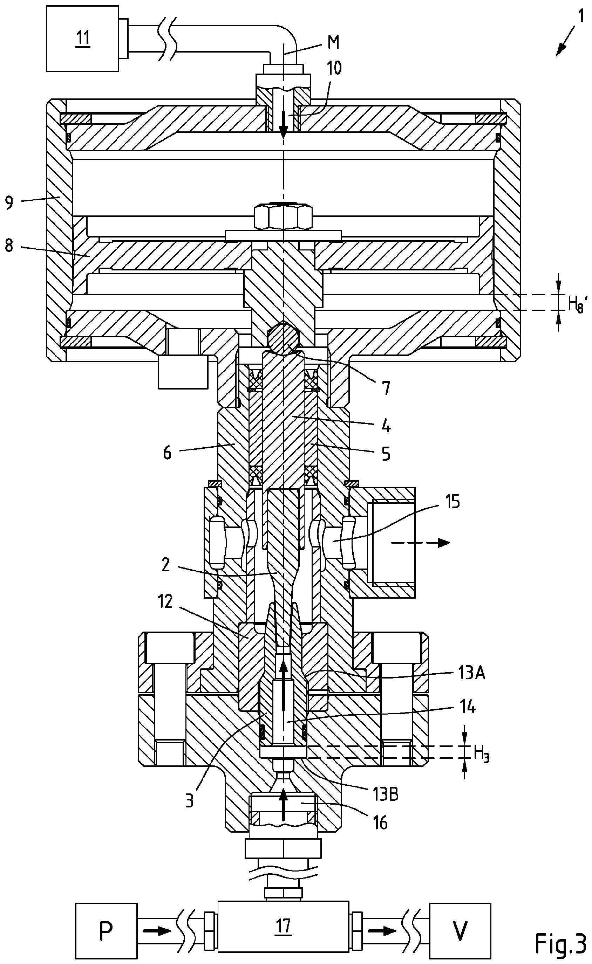

Fig. 3 zeigt die Vorrichtung aus Fig. 1 in einer dritten Ventilstellung . Die bereits im Zusammenhang mit Fig. 1 und Fig. 2 beschriebenen Bereiche der Vorrichtung 1 sind in Fig. 3 mit entsprechenden Bezugszeichen versehen. Bei der in Fig. 3 gezeigten Stellung ist der Kolben 8 geringfügig nach oben verschoben, so dass sich ein vergrößerter Hub Hs' einstellt. Es handelt sich also um eine leicht geöffnete, also "gedrosselte" Ventilstellung. Bei dieser Ventilstellung kann ein Teil des Fluids über den Auslass 15 ausströmen. Auf diese Weise kann der zwischen der Pumpe P und dem Verbraucher V herrschende Fluiddruck in Abhängigkeit von dem in dem Zylindergehäuse 9 herrschenden pneumatischen Druck geregelt werden.

In Fig. 4 ist die Vorrichtung aus Fig. 1 in einer vierten Ventilstellung gezeigt. Die bereits im Zusammenhang mit Fig. 1 bis Fig. 3 beschriebenen Bereiche der Vorrichtung 1 sind auch in Fig. 4 mit entsprechenden Bezugszeichen versehen. Auch bei der in Fig. 4 dargestellten Situation ist die Drucklufteinheit 11 aktiviert, so dass Luft über die Druckluftöffnung 10 in das Zylindergehäuse 9 geleitet wird, wodurch der Kolben 8 in Richtung des Ventilsitzes 3 nach unten verschoben wird. Im Unterschied zu Fig. 1 bis Fig. 3 ist allerdings bei der in Fig. 4 gezeigten Stellung die Pumpe P deaktiviert oder ausgefallen, was einen plötzlichen Druckabfall im Bereich zwischen der Pumpe P und dem Verbraucher V zur Folge hat. Bei einem derartigen - meist abrupten - Druckabfall besteht bei herkömmlichen Vorrichtungen mit starrem Ventilsitz die Gefahr, dass die beiden Ventilteile (Ventilkegel und Ventilsitz) aufgrund der stoßartigen Belastung verklemmen. Bei der erfindungsgemäßen Vorrichtung 1 ist hingegen ein "schwimmender" Ventilsitz 3 vorgesehen, der in Richtung der Mittelachse M beweglich gelagert ist. Insbesondere ist vorgesehen, dass bei geschlossener Ventilstellung der Hub H₃ zwischen dem Ventilsitz 3 und seinem unteren Anschlag 13B größer als der Hub H₈ zwischen dem Kolben 8 und seinem unteren Anschlag (vgl. Fig. 2). Dies führt dazu, dass der Ventilsitz 3 und der Kolben 8 bei einem plötzlichen einseitigen Druckabfall aufgrund des dann nicht mehr bestehenden Gleichgewichts in eine Richtung gedrückt werden. In Fig. 4 ist erkennbar, dass der Ventilsitz 3 und der Kolben 8 infolge eines Druckabfalls im Bereich des Einlasses 16 nach "unten" (also in Richtung des Einlasses 16) verschoben wurden, wobei der Kolben 8 aufgrund seines in diese Verschiebungsrichtung kürzeren Hubs H₈ früher an seinen unteren Anschlag stößt als der Ventilsitz 3 an seinen unteren Anschlag 13B stößt. Aufgrund des verbleibenden (Rest-)Hubs H₃' kann sich der Ventilsitz 3 noch weiter in Richtung des Einlasses 16 bewegen und sich dabei von dem Verschlusselement 2 lösen. Die Beweglichkeit des Ventilsitzes 3 führt zudem dazu, dass bei der Ausweichbewegung des Ventilsitzes 3 (z.B. von dem oberen Anschlag 13A in Richtung des unteren Anschlags 13B) aufgrund von Reibung Bewegungsenergie in Wärme umgewandelt werden kann. Dies führt zu einem sanfteren Anschlag des Ventilsitzes 3 und somit zu einer verringerten Klemmgefahr. Das Verschlusselement 2 kann daher auch nach einem abrupten Druckabfall ohne Verklemmen aus dem Ventilsitz 3 gezogen werden, wenn der auf den Kolben 8 wirkende "Gegendruck" verringert wird (Fig. 4 zeigt eine leicht geöffnete Ventilstellung).

### Bezugszeichenliste:

- 1:: Vorrichtung
- 2:: Verschlusselement
- 3:: Ventilsitz
- 4:: Verschlusselementträger
- 5:: Ventilführung
- 6:: Ventilgehäuse
- 7:: Kugel
- 8:: Kolben
- 9:: Zylindergehäuse
- 10:: Druckluftöffnung
- 11:: Drucklufteinheit
- 12:: Ventilsitzführung
- 13A:: oberer Anschlag
- 13B:: unterer Anschlag
- 14:: Kanal
- 15:: Auslass
- 16:: Einlass
- 17:: T-Stück

- H₃, H₃':: Hub (des Ventilsitzes 3)
- H₈, H₈':: Hub (des Kolbens 8)
- M:: Mittelachse
- P:: Pumpe
- V:: Verbraucher

## Patentansprüche

1. Vorrichtung (1) zur Regelung des Drucks von Fluiden, umfassend:
- ein Ventilgehäuse (6) mit einem Einlass (16) und mit einem Auslass (15),
- ein Verschlusselement (2), das innerhalb des Ventilgehäuses (6) angeordnet ist,
- einen Ventilsitz (3), der innerhalb des Ventilgehäuses (6) angeordnet ist, und
- ein Zylindergehäuse (9) mit einem beweglich darin gelagerten Kolben (8), der mit dem Verschlusselement (2) verbunden ist,
- wobei das Verschlusselement (2) beweglich gelagert ist,
- wobei das Verschlusselement (2) und der Ventilsitz (3) derart angeordnet sind, dass die Verbindung zwischen dem Einlass (16) und dem Auslass (15) geöffnet und teilweise oder vollständig geschlossen werden kann, und
- wobei der Ventilsitz (3) beweglich gelagert ist,
**dadurch gekennzeichnet, dass**
ein Hub (H₃) zwischen dem Ventilsitz (3) und seinem unteren Anschlag (13B) bei geschlossener Ventilstellung größer ist als ein Hub (H₈) zwischen dem Kolben (8) und seinem unteren Anschlag, und dass das Verschlusselement (2) als Ventilkegel gestaltet ist, der einen Kegelwinkel zwischen gegenüberliegenden Seiten der Mantelfläche im Bereich zwischen 3° und 8°, insbesondere zwischen 4° und 6° aufweist.

2. Vorrichtung nach Anspruch 1,
**dadurch gekennzeichnet, dass**
der Ventilsitz (3) zwischen einem ersten Anschlag (13A) und einem zweiten Anschlag (13B) linear beweglich gelagert ist.

3. Vorrichtung nach Anspruch 1 oder Anspruch 2,
**dadurch gekennzeichnet, dass**
der Ventilsitz (3) einen Hub (H₃) im Bereich zwischen 2 mm und 20 mm aufweist.

4. Vorrichtung nach einem der Ansprüche 1 bis 3,
**dadurch gekennzeichnet, dass**
der Ventilsitz (3) beweglich in einer Ventilsitzführung (12) gelagert ist und/oder dass das Verschlusselement (2) beweglich in einer Ventilführung (5) gelagert ist.

5. Vorrichtung nach einem der Ansprüche 1 bis 4,
**dadurch gekennzeichnet, dass**
der Ventilsitz (3) einen Kanal (14) aufweist.

6. Vorrichtung nach Anspruch 1,
**dadurch gekennzeichnet, dass**
das Zylindergehäuse (9) eine Druckluftöffnung (10) zum Anschluss einer Drucklufteinheit (11) aufweist.

7. Vorrichtung nach einem der Ansprüche 1 bis 6,
**gekennzeichnet durch**
ein mit dem Einlass (16) verbundenes T-Stück (17) zum Anschluss einer Pumpe (P) und eines Verbrauchers (V).

8. Verwendung einer Vorrichtung nach einem der Ansprüche 1 bis 7 in einer Hochdruckanlage mit wenigstens 1000 bar, insbesondere wenigstens 2000 bar.

## Claims

1. Device (1) for regulating the pressure of fluids, comprising:
- a valve housing (6) with an inlet (16) and with an outlet (15),
- a closure element (2), which is arranged inside the valve housing (6),
- a valve seat (3), which is arranged inside the valve housing (6), and
- a cylinder housing (9) with a piston (8) mounted so as to be movable therein and which is connected to the closure element (2),
- wherein the closure element (2) is mounted so as to be movable,
- wherein the closure element (2) and the valve seat (3) are arranged such that the connection between the inlet (16) and the outlet (15) can be opened and partially or fully closed, and
- wherein the valve seat (3) is mounted so as to be movable,
**characterised in that**
a stroke (H₃) between the valve seat (3) and its lower stop (13B) is greater in the case of the closed valve position than a stroke (H₈) between the piston (8) and its lower stop, and that the closure element (2) is designed as a cone-shaped valve plug that has a cone angle between opposing sides of the shell surface in the range of 3° and 8°, in particular between 4° and 6°.

2. Device according to claim 1, **characterised in that** the valve seat (3) is mounted so as to be linearly movable between a first stop (13A) and a second stop (13B).

3. Device according to claim 1 or claim 2, **characterised in that** the valve seat (3) has a stroke (H₃) in the range between 2 mm and 20 mm.

4. Device according to any one of claims 1 to 3, **characterised in that** the valve seat (3) is mounted so as to be movable in a valve seat guide (12) and/or **in that** the closure element (2) is mounted so as to be movable in a valve guide (5).

5. Device according to any one of claims 1 to 4, **characterised in that** the valve seat (3) has a channel (14).

6. Device according to claim 1, **characterised in that** the cylinder housing (9) has a pressurised air opening (10) for connecting a pressurised air inlet (11).

7. Device according to any one of claims 1 to 6, **characterised by** a T-piece (17) connected to the inlet (16) for connecting a pump (P) and a consumer (V).

8. Use of a device according to any one of claims 1 to 7 in a high-pressure system with at least 1000 bar, in particular at least 2000 bar.

## Revendications

1. Dispositif (1) de réglage de la pression de fluides, comportant:
- un boîtier de soupape (6) comportant une entrée (16) et une sortie (15),
- un élément de fermeture (2) disposé à l'intérieur du boîtier de soupape (6), et
- un siège de soupape (3) disposé à l'intérieur du boîtier de soupape (6),
- un corps de cylindre (9) comportant un piston (8) étant logé de manière mobile à l'intérieur du corps de cylindre et étant relié à l'élément de fermeture (2),
- l'élément de fermeture (2) étant monté de manière mobile,
- l'élément de fermeture (2) et le siège de soupape (3) étant disposés de sorte que la liaison entre l'entrée (16) et la sortie (15) puisse être ouverte et partiellement ou complètement fermée, et
- le siège de soupape (3) étant monté de manière mobile,
**caractérisé en ce qu'**une course (H₃) entre le siège de soupape (3) et sa butée inférieure (13B) est, lorsque la soupape est en position fermée, supérieure à une course (H₈) entre le piston (8) et sa butée inférieure, et **en ce que** l'élément de fermeture (2) est conçu comme un cône de soupape qui présente un angle de cône entre les côtés opposés de la surface de gaine dans la plage comprise entre 3° et 8°, notamment entre 4° et 6°.

2. Dispositif selon la revendication 1, **caractérisé en ce que** le siège de soupape (3) est agencé mobile et linéairement entre une première butée (13A) et une deuxième butée (13B).

3. Dispositif selon la revendication 1 ou la revendication 2, **caractérisé en ce que** le siège de soupape (3) présente une course (H₃) dans la plage comprise entre 2 mm et 20 mm.

4. Dispositif selon l'une quelconque des revendications 1 à 3, **caractérisé en ce que** le siège de soupape (3) est monté mobile dans un guide de siège de soupape (12) et/ou **en ce que** l'élément de fermeture (2) est monté mobile dans un guide de soupape (5).

5. Dispositif selon l'une quelconque des revendications 1 à 4, **caractérisé en ce que** le siège de soupape (3) présente un canal (14).

6. Dispositif selon la revendication 1, **caractérisé en ce que** le corps de cylindre (9) présente une ouverture d'air comprimé (10) pour le raccordement d'une unité à air comprimé (11).

7. Dispositif selon l'une quelconque des revendications 1 à 6, **caractérisé par** une pièce en T (17) reliée à l'entrée(16) pour le raccordement d'une pompe (P) et d'un consommateur (V).

8. Utilisation d'un dispositif selon l'une quelconque des revendications 1 à 7 dans une installation haute pression avec au moins 1 000 bar, notamment d'au moins 2 000 bar.
